(19) Europäisches Patentamt
European Patent Office
Office européen des brevets

(11) **EP 2 158 735 B1**

(12) **FASCICULE DE BREVET EUROPEEN**

(45) Date de publication et mention
de la délivrance du brevet:
**07.08.2013 Bulletin 2013/32**

(21) Numéro de dépôt: **08806017.3**

(22) Date de dépôt: **18.06.2008**

(51) Int Cl.:
***H04W 12/06*** *(2009.01)*

(86) Numéro de dépôt international:
**PCT/FR2008/051082**

(87) Numéro de publication internationale:
**WO 2009/007563 (15.01.2009 Gazette 2009/03)**

(54) **PROCÉDÉ DE COMMUNICATION ENTRE UN NOEUD SOURCE ET UN NOEUD DESTINATAIRE, LES NOEUDS APPARTENANT A UN RÉSEAU VÉHICULAIRE**

VERFAHREN ZUR KOMMUNIKATION ZWISCHEN QUELL- UND ZIELKNOTENS, DIE ZU EINEM FAHRZEUGNETZWERK GEHÖREN

METHOD OF COMMUNICATION BETWEEN A SOURCE NODE AND A DESTINATION NODE, THE NODES BELONGING TO A VEHICULAR NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.06.2007 FR 0755945**

(43) Date de publication de la demande:
**03.03.2010 Bulletin 2010/09**

(73) Titulaire: **FRANCE TELECOM**
**75015 Paris (FR)**

(72) Inventeurs:
• **TCHEPNDA, Christian**
**F-92130 Issy Les Moulineaux (FR)**
• **MOUSTAFA, Hassnaa**
**F-92100 Boulogne Billancourt (FR)**

(74) Mandataire: **Lecomte, Isabelle**
**France Telecom**
**PIV / Brevets**
**38-40, rue du Général Leclerc**
**F-92794 Issy les Moulineaux Cedex 9 (FR)**

(56) Documents cités:
**JP-A- 2004 096 356**    **US-A1- 2007 066 312**
**US-A1- 2007 086 427**    **US-B1- 6 611 688**
**US-B1- 7 023 818**

• JIAN LI ET AL: "PANDA: A novel mechanism for flooding based route discovery in ad hoc networks" WIRELESS NETWORKS ; THE JOURNAL OF MOBILE COMMUNICATION, COMPUTATION AND INFORMATION, KLUWER ACADEMIC PUBLISHERS, DO, vol. 12, no. 6, 27 avril 2006 (2006-04-27), pages 771-787, XP019438252 ISSN: 1572-8196

**Description**

L'invention concerne une technique de communication entre un noeud source et un noeud destinataire, les noeuds appartenant à un réseau véhiculaire et étant aptes à acheminer des paquets dans le réseau, le noeud source étant en déplacement.

L'invention se situe dans le domaine des réseaux véhiculaires. Il s'agit d'une forme particulière de réseaux mobiles ad-hoc hybrides. Dans de tels réseaux, des noeuds mobiles communiquent par des liaisons sans fil entre eux et également avec des points d'accès fixes, ces derniers appartenant à l'infrastructure d'un réseau de communication. Les points d'accès fixes sont déployés par un opérateur du réseau de communication, par exemple le long de routes.

Une méthode connue sous le nom de EAP, pour "Extensible Authentication Protocol" en anglais, et spécifiée dans la RFC2284 permet d'authentifier un client afin de lui permettre d'accéder à l'infrastructure de l'opérateur et aux services qu'il propose. Cette méthode d'authentification et de gestion de l'accès aux services présente des résultats satisfaisants lorsque le noeud mobile et un point d'accès à l'infrastructure de l'opérateur sont en communication directe, c'est-à-dire que le noeud mobile et le point d'accès sont à portée de transmission l'un de l'autre.

Une première implémentation de l'authentification EAP est implémentée au dessus de la couche 2 du modèle de référence des réseaux OSI, telle que spécifiée dans les normes IEEE 802.1 li et IEEE 802.16. L'accès à l'infrastructure de l'opérateur pour un client donné est déverrouillé suite à une authentification avec succès du client. Toutefois, il n'est actuellement pas possible, du fait de l'encapsulation des données EAP dans la couche de liaison de données de permettre à un noeud mobile de s'authentifier lorsqu'il n'est pas en portée directe d'un point d'accès.

Une deuxième implémentation de l'authentification EAP est implémentée au dessus de la couche 3 du modèle de référence des réseaux OSI. Elle est connue sous le nom de protocole PANA, pour "Protocol for carrying Authentication for Network Access" en anglais, lequel est en cours de spécification à l'IETF. Ce protocole a pour but de permettre à des clients de s'authentifier pour un accès à une infrastructure en utilisant les protocoles IP. Son implémentation au dessus de la couche IP lui permet de bénéficier du protocole de routage et par conséquent de rendre possible l'authentification EAP lorsque le noeud mobile n'est pas en portée directe d'un point d'accès. Dans ce cas, un ou plusieurs autres noeuds mobiles servent de relais vers un point d'accès. Un des autres noeuds mobiles en portée de transmission du noeud mobile requérant sert de point d'entrée au réseau. Pour mettre en oeuvre la procédure d'authentification, on assigne un rôle particulier à ce dernier, appelé par la suite contrôleur d'accès. Toutefois, cette implémentation pose différents problèmes dans le contexte des réseaux véhiculaires. En effet, le contrôleur d'accès accède aux paramètres de sécurité du client. Dans un réseau véhiculaire, il ne s'agit pas nécessairement d'un noeud, dit de confiance. De plus, le protocole PANA contraint les échanges liés à la mise en oeuvre de l'authentification ainsi que les échanges ultérieurs avec l'infrastructure à s'effectuer par l'intermédiaire du contrôleur d'accès. Lorsque la mobilité des noeuds est importante, un noeud mobile authentifié va rester en portée de transmission du contrôleur d'accès uniquement pendant des périodes de durée limitée. De plus, pour acheminer les paquets, il nécessite une infrastructure de routage IP dans le réseau véhiculaire, pour la gestion de tables de routage et de la topologie du réseau.

L'abrégé de la demande de brevet japonaise publiée sous le numéro 2004096356 propose un procédé permettant de prédire à partir de la position et de la vitesse d'un terminal un futur point d'accès avec lequel le terminal va communiquer.

Le brevet américain US6,611,688B 1 décrit un procédé dans lequel un terminal mobile transmet à une infrastructure un rapport de position, comprenant la position et la vitesse.

L'article "PANDA : A novel mechanism for flooding based route discovery in ad hoc networks" de J. Li et al. présente un état de l'art sur les mécanismes de découverte de routes par inondation dans les réseaux ad hoc.

Il existe donc un besoin d'une technique permettant à un noeud en déplacement de s'authentifier auprès d'un point d'accès à un réseau de communication, indépendamment de l'établissement de tables de routage et de topologie, les échanges entre le noeud en déplacement et le point d'accès pouvant être effectués par l'intermédiaire d'autres noeuds également mobiles.

L'invention répond à ce besoin en proposant un procédé de communication entre un noeud source et un noeud destinataire, lesdits noeuds appartenant à un réseau véhiculaire et étant aptes à acheminer des paquets dans le réseau, ledit noeud source étant en déplacement. Le procédé comprend les étapes suivantes mises en oeuvre par le noeud destinataire :

- une étape de réception d'un paquet transmis à partir du noeud source, ledit paquet comprenant en outre des informations de mobilité courantes relatives au noeud source ;
- et pour l'acheminement d'au moins un paquet de réponse à destination du noeud source,

    - une étape de prédiction d'une zone géographique de localisation du noeud source à partir des informations de mobilité courantes relatives au noeud source contenues dans ledit paquet préalablement reçu de celui-ci, la zone géographique ainsi prédite étant réputée zone géographique de destination ;

- au moins une étape de transmission d'un autre paquet vers la zone géographique de destination, l'autre paquet comprenant ledit paquet de réponse et la zone géographique de destination et transitant, le cas échéant par au moins un noeud intermédiaire appartenant au réseau véhiculaire.

On notera que l'invention tire son origine d'un problème d'authentification d'un noeud en déplacement auprès d'un point d'accès fixe à un réseau de communication. Toutefois, l'invention peut s'appliquer également au dialogue entre un noeud source en déplacement et un noeud quelconque de destination. Le noeud de destination ou noeud destinataire peut être fixe ou bien lui-même en déplacement. Le paquet, émis par le noeud source et comprenant des informations de mobilité courantes du noeud source, est acheminé dans le réseau véhiculaire à l'aide d'une information relative à la position géographique du noeud de destination du paquet ou zone géographique de destination. L'acheminement de ce paquet jusqu'au noeud de destination peut être effectué de différentes façons. A la réception de ce paquet, le noeud de destination associe les informations de mobilité reçues au noeud source. A titre d'exemple, les informations de mobilité comprennent la position géographique du noeud source et sa vitesse à l'instant d'émission du paquet. Lorsqu'ultérieurement, le noeud de destination doit envoyer un paquet de réponse au noeud source, le noeud de destination peut prédire, à partir des informations de mobilité et du temps écoulé entre la réception du paquet et le temps courant, une zone géographique où le noeud source se situe probablement. Le paquet est alors acheminé vers la zone géographique prédite en tant que zone géographique de destination. Le procédé évite ainsi la constitution et la mise à jour de tables d'acheminement ou de localisation complexes. Il est particulièrement bien adapté à des dialogues tels que des échanges protocolaires entre deux noeuds, comme par exemple ceux nécessaires à la mise en oeuvre de l'authentification d'un noeud. Du fait de sa mise en oeuvre directement au dessus de la couche 2 du modèle de référence des réseaux OSI, il ne permet pas à un noeud d'accéder aux couches de type IP, avant même d'être authentifié. Sa mise en oeuvre est également possible pour des liaisons multi-sauts, c'est-à-dire lorsque les paquets sont acheminés entre les deux noeuds par l'intermédiaire d'autres noeuds, relayant le paquet. On ne crée pas de routes entre le noeud source et le noeud de destination. De plus, dans un réseau véhiculaire, les noeuds étant en déplacement, les routes demandent à être modifiées fréquemment et nécessitent donc des échanges de données importants entre les différents noeuds du réseau. On évite ainsi des mises à jour de routes fréquentes. En outre, l'acheminement selon l'invention étant opportuniste, une malveillance éventuelle d'un noeud n'a que peu d'impacts sur l'acheminement des paquets.

Le procédé est également particulièrement bien adapté à d'autres échanges protocolaires, tels que ceux requis pour la mise en oeuvre du protocole PANA. De plus, il peut également être mis en oeuvre lors de l'envoi de données ponctuelles, telles que des données relatives à des incidents de la route, à la conduite coopérative,...

De plus, le paquet transmis à partir du noeud source et l'autre paquet transitant par le noeud intermédiaire, il est prévu les étapes suivantes mises en oeuvre par le noeud intermédiaire :

- une étape de test, au cours de laquelle, le noeud intermédiaire vérifie si sa position courante est plus proche de la zone géographique de destination que celle du noeud intermédiaire précédent, celui-ci ayant inséré sa position courante dans ledit paquet avant de le retransmettre; et,
- une étape de retransmission du paquet en transit vers la zone géographique de destination uniquement si le test est positif.

Chaque noeud source ou intermédiaire transmettant le paquet insère sa propre position courante. Afin d'optimiser les conditions dans lesquelles il relaie ou retransmet un paquet à acheminer dans le réseau, un noeud intermédiaire recevant le paquet vérifie avant de le retransmettre s'il se trouve effectivement plus proche de la zone géographique de destination que le noeud précédent. Si ce n'est pas le cas, il n'est pas utile qu'il retransmette le paquet. Ainsi, seule une partie des noeuds intermédiaires recevant le paquet le retransmet et on évite d'encombrer le réseau par des transmissions de paquets inutiles. Les paquets peuvent aussi bien être le paquet émis par le noeud source que le paquet de réponse émis par le noeud de destination.

En outre, le paquet transmis à partir du noeud source, respectivement l'autre paquet, est reçu parallèlement par une pluralité de noeuds intermédiaires et chaque noeud intermédiaire met en oeuvre l'étape de test et retransmet le cas échéant le paquet, respectivement l'autre paquet, afin d'acheminer le paquet, respectivement l'autre paquet par une pluralité de chemins concurrents.

Le paquet, émis par le noeud source ou par le noeud de destination. étant acheminé éventuellement par plusieurs chemins concurrents en fonction de la configuration du réseau véhiculaire, la probabilité que le paquet atteigne sa destination est plus importante.

De plus, préalablement à l'étape de retransmission du paquet en transit vers la zone géographique de destination, ledit noeud intermédiaire vérifie en outre si la valeur de l'angle compris entre une direction de référence et une ligne s'étendant entre le noeud intermédiaire et la zone géographique de destination est inférieure à un seuil prédéterminé.

On détermine l'angle compris entre une direction de référence et une ligne s'étendant entre le noeud intermédiaire et la zone géographique de destination. Seuls les noeuds intermédiaires pour lesquels la valeur de cet angle est inférieure à un seuil prédéterminé vont retransmettre le paquet. On limite ainsi le nombre de noeuds intermédiaires retransmettant le paquet afin d'optimiser l'acheminement du paquet dans le réseau. Ceci permet d'éviter des transmissions de paquets inutiles et de diminuer l'encombrement du réseau.

Dans un mode particulier de réalisation, le noeud destinataire étant un point d'accès à un réseau de communication, relié à une entité apte à authentifier un client,

- avant authentification, un paquet en provenance du noeud source et à destination du point d'accès est retransmis par le point d'accès à l'entité et,
- après authentification, le point d'accès autorise le noeud en déplacement à accéder au réseau de communication.

On se place ici dans le cadre de la mise en oeuvre de l'autorisation de l'accès à un réseau de communication suite à une authentification réussie. Dans ce cas, le noeud source est alors autorisé à accéder aux ressources du réseau de communication par le point d'accès suite à une authentification réussie effectuée avec un serveur d'authentification. Le contrôle d'accès est fait à un point d'accès du réseau de communication, qui est donc de confiance. Les informations de sécurité du noeud en déplacement sont ainsi fournies uniquement à des points d'accès du réseau. Des mécanismes réseau peuvent également être mis en oeuvre dans le réseau pour permettre au noeud en déplacement de changer de point d'accès.

L'invention concerne également un noeud d'un réseau véhiculaire, apte à communiquer avec d'autres noeuds du réseau, comprenant :

- des moyens de réception d'un paquet émis par un autre noeud en déplacement, ledit paquet comprenant des informations de mobilité courantes relatives à l'autre noeud :
- des moyens de prédiction, agencés pour prédire une zone géographique de localisation de l'autre noeud en déplacement à partir des informations de mobilité courantes relatives audit autre noeud contenues dans un paquet préalablement reçu, à destination duquel un paquet de réponse est à acheminer, la zone géographique ainsi prédite étant réputée zone géographique de destination ;
- des moyens de transmission d'un autre paquet vers la zone géographique de destination, l'autre paquet comprenant le paquet de réponse et la zone géographique de destination.

L'invention concerne un noeud comprenant en outre :

- des moyens de test, agencés pour vérifier, pour un paquet reçu et à acheminer vers une zone géographique de destination, que la position géographique courante du noeud est plus proche de la zone géographique de destination que celle du noeud intermédiaire précédent.

L'invention concerne également un réseau véhiculaire, dans lequel des paquets sont acheminés par des noeuds en fonction d'une zone géographique de destination, comprenant :

- au moins un noeud tel que décrit ci-dessus ;
- au moins un noeud source apte à se déplacer et comprenant des moyens d'envoi de paquets à un noeud destinataire, agencés pour ajouter à un paquet à envoyer des informations de mobilité courantes,

et dans le cas où le noeud source et le noeud destinataire ne sont pas en portée radio directe, au moins un noeud intermédiaire comprenant des moyens de test, agencés pour vérifier, pour un paquet reçu et à acheminer vers une zone géographique de destination, si la position géographique courante du noeud est plus proche de la zone géographique de destination que celle du noeud intermédiaire précédent.

L'invention concerne également :

- un programme, pour un noeud d'un réseau véhiculaire, pour communiquer avec un autre noeud du réseau, ledit autre noeud étant en déplacement, comprenant des instructions de programme pour :

  - recevoir un paquet transmis à partir d'un autre noeud, dit noeud source, ledit paquet comprenant des informations de mobilité courantes relatives au noeud source ;
  - et pour acheminer un paquet de réponse à destination du noeud source,

    - prédire une zone géographique de localisation du noeud source à partir des informations de mobilité courantes relatives au noeud source contenues dans ledit paquet préalablement reçu de celui-ci, la zone géographique ainsi prédite étant réputée zone géographique de destination ;

- transmettre un autre paquet vers la zone géographique de destination, l'autre paquet comprenant ledit paquet de réponse et la zone géographique de destination,

lorsque ledit programme est exécuté par le noeud, et

- un support d'enregistrement lisible par un noeud sur lequel est enregistré le programme tel que décrit ci-dessus.

L'invention concerne en outre un signal supportant un message comprenant un paquet et une zone géographique de destination, émis par un noeud à destination d'uen autre noeud dans un réseau véhiculaire, ladite zone géographique état prédite à partir d'informations de mobilité courantes, émis par un noeud en déplacement, lesdites informations de mobilité courantes à un instant antérieur reçues de l'autre noeud.

L'invention sera mieux comprise à l'aide de la description suivante d'un mode de réalisation particulier du procédé de l'invention, en référence aux dessins annexés sur lesquels :

- la figure 1 représente une architecture de réseaux dans laquelle un mode particulier de réalisation de l'invention est mis en oeuvre ;
- la figure 2 représente les étapes du procédé mis en oeuvre par un noeud source en déplacement selon un mode particulier de réalisation de l'invention ;
- la figure 3 représente les étapes du procédé mis en oeuvre par un noeud d'un réseau véhiculaire selon un mode particulier de réalisation de l'invention :
- la figure 4 représente un entête d'un message échangé entre deux noeuds selon un mode particulier de réalisation de l'invention ;
- la figure 5 représente un noeud d'un réseau véhiculaire selon un mode particulier de réalisation de l'invention.

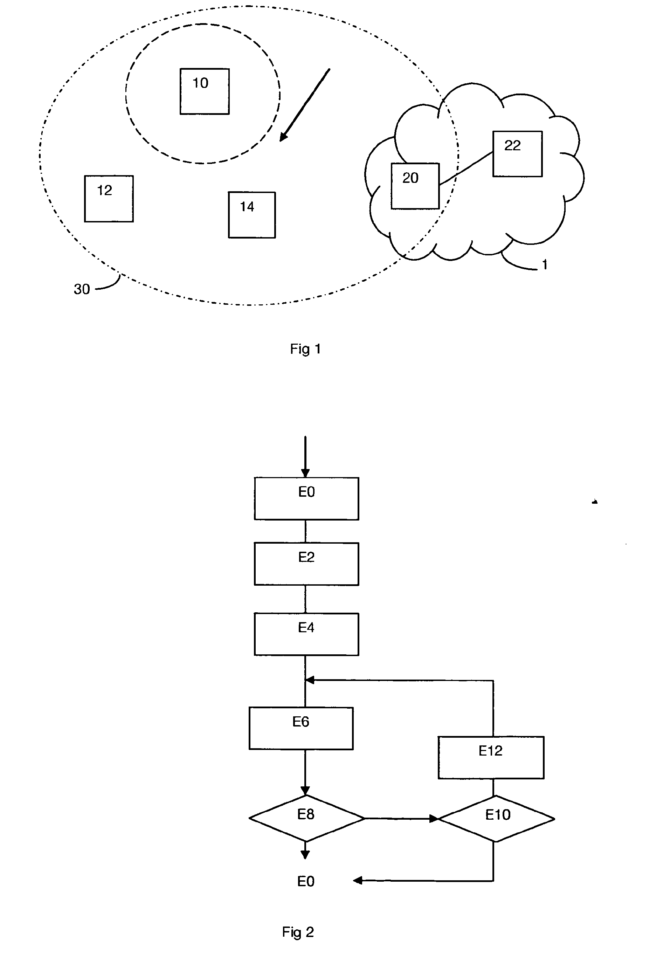

On a représenté sur la figure 1 une pluralité de noeuds 10, 12 et 14 appartenant à un réseau véhiculaire 30. Le noeud 10 est en déplacement et sa direction de déplacement est matérialisée sur la figure 1 par une flèche. Un point d'accès 20 fixe, appartenant également au réseau véhiculaire 30. permet aux noeuds 10, 12 et 14 du réseau véhiculaire d'accéder à un réseau de communication 1. Les noeuds 10, 12 et 14 et le point d'accès 20 sont aptes à communiquer entre eux par une interface radio, par exemple en mettant en oeuvre la norme IEEE 802.11 sur un canal radio commun. Ils sont aptes à acheminer des paquets dans le réseau véhiculaire 30 en fonction d'une zone géographique de destination. Les noeuds mobiles sont en outre équipés de systèmes de positionnement et d'horloge. Les horloges des noeuds sont synchronisées entre elles, par exemple par des systèmes tels que le GPS. Galiléo,...

Afin de vérifier les droits des utilisateurs à accéder au réseau 1 de communication, le point d'accès 20 est connecté à un serveur 22 d'authentification. Le serveur 22 d'authentitication est apte à mettre en oeuvre une procédure d'authentification avec un noeud 10 qui sollicite un accès au réseau 1 de communication. A titre d'exemple, la procédure d'authentification est effectuée à l'aide de messages protocolaires EAP. pour "Extensible Authentication Protocol". Le point d'accès 20 contribue à la mise en oeuvre de la procédure d'authentification en dialoguant avec le noeud 10 en déplacement et le serveur d'authentification 22.

Un seul point d'accès 20 au réseau 1 de communication est représenté sur la figure 1. Il est bien entendu qu'une pluralité de tels points d'accès au réseau est déployée sur une zone sur laquelle on souhaite offrir un accès au réseau 1 de communication.

A titre d'exemple, on se place par la suite dans le cas où le noeud 10 souhaite accéder au réseau 1 de communication. Il a sélectionné un point d'accès 20 au réseau 1 de communication. On ne décrit pas ici la manière dont un noeud obtient la liste des points d'accès au réseau 1 de communication et la position géographique de chaque point d'accès.

Nous allons maintenant décrire le procédé tel qu'il est mis en oeuvre par un noeud 10 initiant un dialogue avec un point d'accès 20 en relation avec la figure 2.

Nous nous plaçons par la suite dans le cas particulier où le noeud 10 contacte le point d'accès 20 en vue de son authentification par le serveur 22 d'authentification.

Le procédé est mis en oeuvre directement au dessus de la couche de niveau 2 OSI et il ne permet pas à un noeud d'accéder aux couches de type IP, avant même d'être authentifié.

Le procédé débute dans une étape initiale E0 d'attente d'une demande d'émission d'un paquet.

Dans une étape E2. on détecte que le noeud 10 a un paquet à envoyer au point d'accès 20. Il s'agit par exemple d'un message EAP-Start, indiquant que le noeud 10 souhaite s'authentifier auprès du serveur d'authentification 22 par l'intermédiaire du point d'accès 20. En interne au noeud 10, ce paquet est transmis d'une couche supérieure à une couche C. qui est elle-même immédiatement supérieure à la couche 2 du modèle de référence des réseaux OSI.

Dans une étape E4, le noeud 10 ajoute un entête 50 au paquet à envoyer en vue de son acheminement à destination du point d'accès 20.

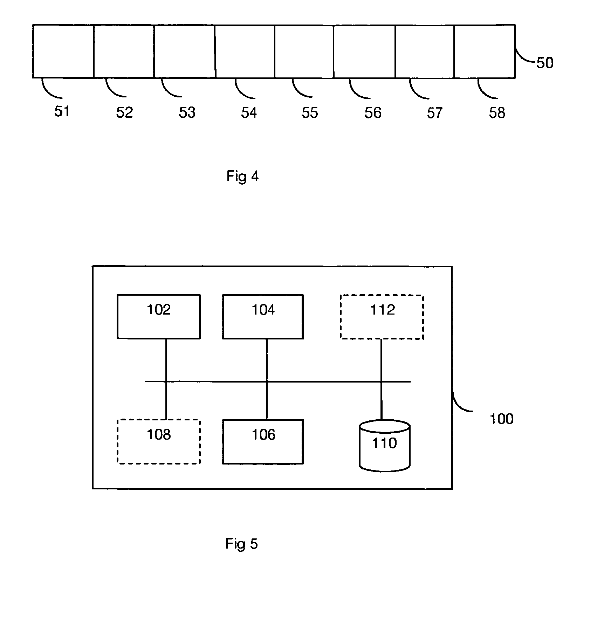

Un entête 50, tel que représenté sur la figure 4, comprend les informations suivantes :

- un champ 51 identifiant le noeud source du paquet ;
- un champ 52 identifiant le noeud destinataire du paquet ;
- un champ 53 comprenant la position géographique du noeud source du paquet ;
- un champ 54 comprenant la vitesse du noeud source du paquet ;
- un champ 55 comprenant une étiquette temporelle ;
- un champ 56 comprenant une durée de vie du paquet, à l'issue de laquelle le paquet ne doit plus être retransmis ;
- un champ 57 comprenant une information relative à la zone géographique vers laquelle le paquet doit être acheminé;
- un champ 58 identifiant la position géographique du dernier émetteur du message.

L'utilisation de ces différents champs va être détaillée par la suite lors de la description des étapes du procédé.

Les champs 53 et 54 comprenant respectivement une position géographique et la vitesse du noeud source du paquet correspondent à des informations de mobilité courantes relatives au noeud source du paquet.

Le champ 55 d'étiquette temporelle est renseigné à l'aide de la valeur que prend l'horloge du noeud source à l'instant d'émission.

Le champ 56 de durée de vie est renseigné par une valeur prédéterminée et paramétrable.

Le champ 57 de zone géographique de destination est renseigné à l'aide de la position géographique du point d'accès 20.

Le champ 58 n'est pas présent dans cet entête initial.

Dans une étape E6, la couche C transmet le message comprenant le paquet et son entête 50 en vue de sa transmission par les couches 2 et 1 et passe en attente de réception d'une réponse ou de l'expiration d'une temporisation d'attente T. Le message est transmis sur le canal radio et est reçu par un ou des noeuds du réseau véhiculaire qui se situent à portée de transmission du noeud 10. Le noeud 10 en déplacement transmet ainsi un message comprenant le paquet et des informations de mobilité courantes.

En particulier, les informations de mobilité appartiennent au groupe comprenant au moins une position géographique et une vitesse.

Une valeur Nb-retrans est initialisée à zéro.

Dans une étape E8, on vérifie si un message de réponse a été reçu en provenance du point d'accès 20. Si tel est le cas, le noeud 10 supprime l'entête 50 du message de réponse reçu et obtient un paquet de réponse. La couche supérieure qui avait demandé l'émission du paquet par le noeud source 10 traite le paquet de réponse.

Si aucune réponse n'a été reçue, à l'expiration de la temporisation T, on teste dans une étape E10 si le nombre maximum de retransmissions est atteint.

Si le nombre maximum de retransmissions est atteint, le noeud 10 tente alors de sélectionner un nouveau point d'accès en vue de réitérer sa demande d'authentification. Il s'agit de méthodes classiques de sélection de points d'accès par un noeud.

Si le nombre maximum de retransmissions n'est pas atteint, le noeud 10, dans une étape E12, incrémente la valeur de Nb-retrans et met à jour les valeurs de l'entête 50, notamment les champs 53 et 54 comprenant les informations de mobilité courantes, le champ 55 d'étiquette temporelle, le champ 56 de durée de vie. Le procédé repasse ensuite à l'étape E6 de diffusion du paquet.

On se place par la suite dans le cas où le message comprenant un entête 50 et le paquet à acheminer a été transmis sur le canal radio.

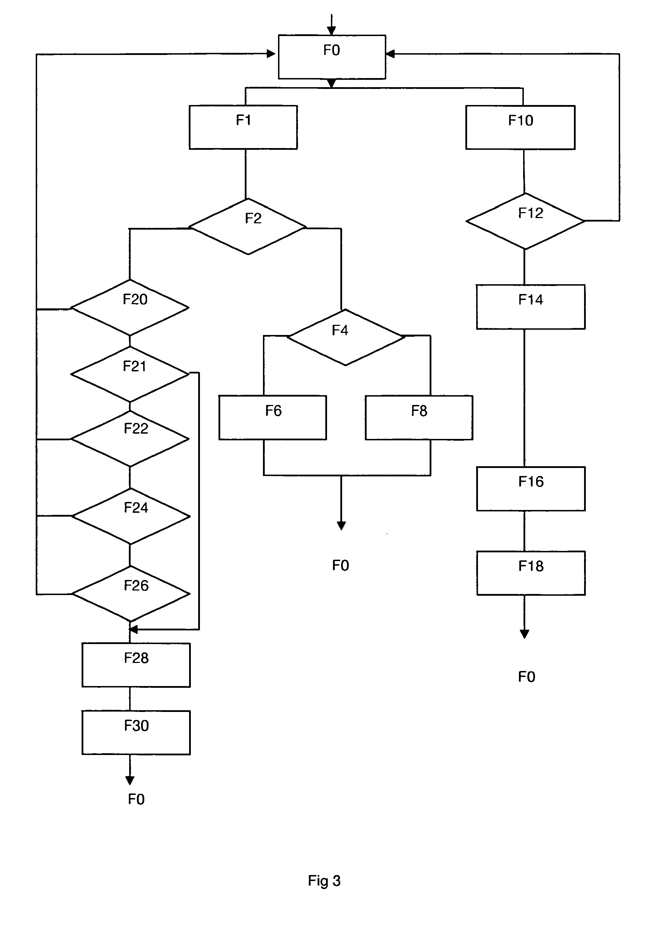

Nous allons maintenant décrire le procédé tel qu'il est mis en oeuvre par un noeud 12 intermédiaire ou relais recevant un message comprenant un entête 50 et un paquet à acheminer sur le canal radio en relation avec la figure 3.

Le noeud 12 intermédiaire est en attente de réception d'un message dans une étape F0.

Le procédé débute à l'étape F1 par la réception d'un message comprenant un entête 50 et un paquet à acheminer. Dans une étape F2, le noeud 12 intermédiaire vérifie s'il est le destinataire du message en lisant le champ 52 identifiant le noeud destinataire du paquet. On se place ici dans le cas particulier du noeud intermédiaire 12 qui n'est donc pas destinataire du paquet, le paquet étant à destination du point d'accès 20.

Dans une étape F20, le noeud intermédiaire 12 vérifie si le message nécessite un traitement, c'est-à-dire que la durée de vie indiquée dans le champ 56 n'a pas expiré.

Si la durée de vie du message a expiré, aucun traitement n'est réalisé et le procédé repasse à l'étape F0 en attente de réception d'un paquet.

Si la durée de vie du message n'a pas expiré, le procédé met en oeuvre une étape de test F21 qui sera décrite par la suite. On se place ici dans le cas où le résultat de cette étape de test F21 est négatif. Le noeud 12 détermine dans une étape F22 un angle entre une direction de référence, par exemple le pôle Nord, et la ligne s'étendant entre lui-même et la zone géographique de destination comprise dans le champ 57. Il s'agit de calculer un angle entre une direction de référence à partir de la position géographique du noeud 12 intermédiaire et de celle de la zone géographique de destination dans une représentation sphérique, par exemple de la façon décrite en Annexe. Les positions sont exprimées en longitude et latitude. Dans le cas du traitement du paquet émis par le noeud source, la zone géographique de destination correspond à la position du point d'accès 20. Dans le cas particulier où la zone géographique de destination correspond à une position géographique, la ligne s'étendant entre le noeud 12 intermédiaire et la zone géographique de destination correspond à celle s'étendant entre le noeud 12 intermédiaire et la position géographique du point d'accès 20. On vérifie ensuite si la valeur de cet angle est inférieure à un seuil prédéterminé, par exemple $\pi/2$ rad. Dans ce cas, le procédé passe à une étape F24. Dans le cas contraire, aucun traitement n'est effectué et le procédé repasse à l'étape F0 en attente de réception d'un message. Ainsi, seuls les noeuds pour lesquels la valeur de l'angle entre la direction de référence et une ligne s'étendant entre le noeud 12 intermédiaire et la zone géographique de destination est inférieure à un seuil prédéterminé retransmettent le paquet et on évite ainsi d'encombrer le réseau par des transmissions de paquets inutiles. D'autres méthodes peuvent être également utilisées pour déterminer l'angle entre la direction de référence et une ligne s'étendant entre le noeud 12 intermédiaire et la zone géographique de destination.

Dans l'étape F24, le noeud 12 obtient à partir de l'entête 50 la position géographique de l'émetteur précédent du message. Si le noeud source est l'émetteur précédent, il obtient l'information par lecture du champ 53 identifiant le noeud source. Dans le cas contraire, c'est-à-dire qu'un autre noeud intermédiaire a retransmis le message, il obtient l'information par lecture du champ 58 identifiant le dernier émetteur du message. Il vérifie alors s'il se trouve plus proche de la destination que l'émetteur du message précédent. Si ce n'est pas le cas, aucun traitement n'est effectué et le procédé repasse à l'étape F0 en attente de réception d'un message.

Si c'est le cas, c'est-à-dire que le noeud 12 est plus proche de la destination que le noeud émetteur précédent, le noeud 12 vérifie dans une étape F26 que la zone de couverture radio qu'il couvre n'est pas la même que celle de l'émetteur précédent. Si c'est le cas, aucun traitement n'est effectué et le procédé repasse à l'étape F0 en attente de réception d'un message. On évite ainsi que des noeuds très proches, c'est-à-dire couvrant sensiblement la même zone de transmission, ne transmettent inutilement le message.

Si ce n'est pas le cas, c'est-à-dire que la zone de couverture radio du noeud 12 n'est sensiblement pas la même que celle de l'émetteur précédent, le noeud 12. dans une étape F28, met à jour les valeurs de l'entête 50, notamment le champ 58 de position géographique du dernier émetteur du message et transmet le message comprenant l'entête 50 mise à jour sur le canal radio dans une étape F30. Le procédé repasse ensuite à l'étape F0 en attente de réception d'un message.

On remarque que le paquet peut être reçu parallèlement par une pluralité de noeuds intermédiaires et que chaque noeud intermédiaire met alors en oeuvre les étapes du procédé, et notamment les étapes de test et retransmet le cas échéant le paquet, afin d'acheminer le paquet par une pluralité de chemins concurrents.

Nous allons maintenant décrire le procédé tel qu'il est mis en oeuvre par un noeud recevant un message, dont il est destinataire, comprenant un entête 50 et un paquet, sur le canal radio, toujours en relation avec la figure 3. On se place notamment à la réception du message par le point d'accès 20 suite à son acheminement dans le réseau véhiculaire 30. Dans l'étape F2, il a été vérifié que le point d'accès 20, récepteur du message, en est le destinataire.

Dans une étape F4, le point d'accès 20 vérifie si le message doit être traité ou non, notamment en vérifiant si ce message ne lui est pas déjà parvenu ou si la durée de vie du message n'a pas expiré. S'il doit traiter le message, il vérifie s'il existe un contexte de dialogue pour le noeud 10 source dont l'identifiant est indiqué dans l'entête 50 du message reçu.

On notera ici que par "contexte de dialogue", on entend désigner un ensemble d'informations relatives à la mobilité d'un noeud. Un contexte de dialogue est associé à un noeud, un point d'accès et un dialogue particulier du noeud auprès du point d'accès. Il comprend des informations de mobilité transmises par le noeud à un point d'accès durant un dialogue ainsi qu'une étiquette temporelle relative à ces informations de mobilité. Il peut s'agir par exemple d'un dialogue initié par le noeud en vue d'une authentification auprès du serveur d'authentification et pour lequel le point d'accès sert de relais.

Ce contexte de dialogue permet au point d'accès 20 de contacter ensuite le noeud source qui a émis le message initiant le dialogue.

S'il existe déjà un contexte de dialogue pour le noeud identifié dans l'entête 50, le point d'accès 20 met à jour, dans une étape F6, les informations relatives à la mobilité en fonction des informations reçues dans le message.

S'il n'existe pas un contexte de dialogue pour le noeud identifié dans l'entête 50, le point d'accès 20 crée un contexte de dialogue, dans une étape F8. pour le noeud 10 et mémorise les informations relatives à la mobilité reçues.

L'entête 50 du message reçu est alors supprimé et le paquet est traité en interne au point d'accès 20, notamment par une couche supérieure.

Le procédé retourne ensuite à l'étape F0 en attente de réception d'un message sur le canal radio ou en attente de réception d'une demande d'émission d'un message à destination d'un noeud.

On se place maintenant dans le cas où le point d'accès 20 reçoit, dans une étape F10, une demande de la couche supérieure d'émission d'un paquet à destination du noeud 10.

Le point d'accès 20 vérifie dans une étape F12 s'il existe un contexte de dialogue relatif au noeud 10. Si ce n'est pas le cas, le paquet n'est pas transmis et la couche supérieure en est notifiée en interne. Le procédé repasse ensuite à l'étape F0.

S'il existe un contexte de dialogue relatif au noeud 10 auquel le paquet de réponse doit être transmis, le point d'accès 20 obtient dans une étape F14 les informations de mobilité mémorisées, notamment la position géographique et la vitesse du noeud 10. qui étaient courantes lors de l'émission du message ayant conduit à la création ou à la mise à jour du contexte de dialogue.

Dans une étape F16 de prédiction, le point d'accès 20 détermine à partir des informations de mobilité une zone géographique probable où se trouve le noeud 10. Cette zone est illustrée sur la figure 1 par un cercle en pointillé autour du noeud 10. A titre d'exemple, on détermine la distance maximale parcourue par le noeud 10 depuis l'émission du message pour lequel on a mémorisé les informations de mobilité courantes. Celui-ci a mis une durée maximale tl pour parvenir au point d'accès, égale à la durée de vie du message. Le message de réponse peut également mettre une durée maximale t2 pour parvenir au noeud 10, égale à la durée de vie du message. Une durée t3 correspond au temps écoulé entre la réception du message en provenance du noeud 10 et la réception du message par le point d'accès 20 et à destination du noeud 10. A l'aide de la vitesse courante du noeud et du temps cumulé tel que déterminé ci-dessus, on peut donc en déduire la distance maximale parcourue par le noeud. A partir de sa dernière position géographique connue, on en déduit donc une zone géographique où il est probable que le noeud 10 se situe. On représente, à titre d'exemple, cette zone sous la forme d'un cercle, de centre la dernière position connue du noeud 10 et de rayon, la distance déterminée ci-dessus. La zone géographique prédite est alors réputée être la zone géographique de destination. On détermine ainsi un entête 50 comprenant dans le champ 57 la zone géographique de destination et on transmet dans une étape F18 sur le canal radio le message comprenant le paquet de réponse et l'entête 50. Les informations de mobilité transmises dans le message initiant le dialogue par le noeud 10 en déplacement comprennent donc des informations requises pour prédire une zone géographique de localisation du noeud en déplacement à un instant ultérieur. Le procédé repasse ensuite à l'étape F0.

Le paquet est alors relayé par un ou des noeuds intermédiaires vers la zone géographique de destination. Un noeud intermédiaire recevant le paquet dans une étape F1 met en oeuvre le procédé tel que décrit ci-dessus. Il met en oeuvre les étapes F2 et F20. Puis, dans une étape F21, le noeud intermédiaire vérifie si le champ 57 de zone géographique de destination comprend un rayon de mobilité et s'il se situe dans le rayon de mobilité. Si tel est le cas, le procédé effectue une étape F28 dans laquelle il met à jour les valeurs de l'entête 50. notamment le champ 58 de position géographique du dernier émetteur du message et transmet le message comprenant l'entête 50 mise à jour sur le canal radio dans une étape F30. Le procédé repasse ensuite à l'étape F0 en attente de réception d'un message. Si tel n'est pas le cas, c'est-à-dire que la zone géographique de destination ne comprend pas un rayon de mobilité ou que dans le cas contraire, le noeud 12 intermédiaire ne se situe pas dans le rayon de mobilité, il exécute les étapes F22 à F30, notamment les étapes de test F22 et F24, en utilisant en tant que position du noeud de destination, les informations de position comprises dans le champ 57 de zone géographique de destination, c'est-à-dire la dernière position connue du noeud de destination. La ligne s'étendant entre le noeud 12 intermédiaire et la zone géographique de destination correspond alors à celle s'étendant entre le noeud 12 intermédiaire et la dernière position connue du noeud auquel le paquet est destiné.

On note que le procédé est mis en oeuvre de façon itérative pour les différents échanges de message dans le cadre de la procédure d'authentitication.

Une fois que le point d'accès 20 a reçu un paquet EAP-Success du serveur d'authentification 22 et à destination du noeud 10. il le transmet au noeud 10 et l'autorise à accéder au réseau 1 de communication.

La description du procédé a été faite pour un noeud en déplacement qui ne situait pas dans la zone de couverture d'un point d'accès. On note qu'il est également applicable lorsque le noeud initie la procédure d'authentification alors qu'il est dans la zone de couverture du point d'accès et sort ensuite de cette zone avant la fin de la procédure. Le noeud source ayant transmis ses informations de mobilité courantes avant de quitter la zone de couverture, un paquet de réponse peut lui être transmis même en dehors de la zone de couverture du point d'accès. La procédure d'authentification n'est donc pas interrompue dans ce cas.

La description a été faite dans le cas particulier d'une procédure d'authentification. On note toutefois que l'invention est également applicable à d'autres échanges de message, tels que ceux requis pour la mise en oeuvre du protocole PANA ou lors de l'envoi de données ponctuelles, telles que des données relatives à des incidents de la route, à la conduite coopérative, des messages courts...

On notera également que pour des raisons de clarté, le procédé a été décrit successivement au noeud source, au noeud intermédiaire puis au noeud destinataire. Il est bien entendu que les noeuds peuvent jouer indifféremment le rôle du noeud source, celui du noeud intermédiaire et celui du noeud destinataire dans le réseau véhiculaire.

Dans une variante de réalisation, l'étape F22 n'est pas réalisée. En effet, celle-ci permet d'améliorer les performances du procédé. Toutefois, sans l'étape F22, ce dernier présente des performances acceptables.

On va maintenant décrire un noeud 100 d'un réseau véhiculaire 30. apte à communiquer avec d'autres noeuds du réseau, en référence à la figure 5. Le noeud 100 comprend des moyens de communication, non représentés sur la figure 5, lui permettant de communiquer par une interface radio avec les autres noeuds du réseau véhiculaire 30. Il peut s'agir de moyens mettant en oeuvre la norme IEEE 802.11.

Un tel noeud 100, dit noeud destinataire, comprend :

- un module 102 de réception d'un paquet émis par un autre noeud en déplacement, ledit paquet comprenant des informations de mobilité courantes relatives à l'autre noeud :
- un module 104 de prédiction, agencé pour prédire une zone géographique de localisation de l'autre noeud en déplacement à partir des informations de mobilité courantes relatives audit autre noeud contenues dans un paquet préalablement reçu, à destination duquel un paquet de réponse est à acheminer, la zone géographique ainsi prédite étant réputée zone géographique de destination ;
- un module 106 de transmission d'un autre paquet vers la zone géographique de destination, l'autre paquet comprenant le paquet de réponse et la zone géographique de destination.

Les informations de mobilité courantes relatives à un noeud sont mémorisées dans des moyens 110 de mémorisation.

Optionnellement, un noeud, dit noeud intermédiaire, comprend en outre :

- un module 108 de test, agencé pour vérifier, pour un paquet reçu et à acheminer vers une zone géographique de destination, si la position géographique courante du noeud est plus proche de la zone géographique visée que celle du noeud intermédiaire précédent.

Dans un mode de réalisation particulier, le module 108 est également agencé pour insérer la position géographique courante du noeud dans le paquet avant de le transmettre et pour vérifier si la valeur de l'angle compris entre une direction de référence et une ligne s'étendant entre le noeud intermédiaire et la zone géographique de destination est inférieure à un seuil prédéterminé.

De plus, le noeud intermédiaire comprend un module 112 d'envoi de paquets à un noeud destinataire, agencé pour ajouter à un paquet à envoyer des informations de mobilité courantes.

D'autres types d'interfaces radio peuvent être également supportés, notamment des interfaces radios mettant en oeuvre des canaux radios dédiés.

Les modules 102, 104, 106, 108 et 112 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par les noeuds jouant le rôle de noeud destinataire (pour ce qui concerne les modules 102, 104, 106) et par les noeuds jouant le rôle de noeuds intermédiaires ou celui du noeud source (pour ce qui concerne les modules 108 et 112). L'invention concerne donc aussi un programme, pour un noeud d'un réseau véhiculaire. pour communiquer avec un autre noeud du réseau véhiculaire, ledit autre noeud étant en déplacement, comprenant des instructions de programme pour :

- recevoir un paquet transmis à partir un noeud source, ledit paquet comprenant des informations de mobilité courantes relatives au noeud source :
- et pour acheminer un paquet de réponse à destination du noeud source,

  ■ prédire une zone géographique de localisation du noeud source à partir des informations de mobilité courantes relatives au noeud source contenues dans ledit paquet préalablement reçu de celui-ci ;
  ■ transmettre un autre paquet vers la zone géographique de destination, l'autre paquet comprenant ledit paquet de réponse et la zone géographique de destination,

lorsque ledit programme est exécuté par le noeud.

L'invention concerne également un support d'enregistrement lisible par un noeud sur lequel est enregistré le programme.

Les modules logiciels peuvent être stockés dans ou transmis par un support de données. Celui-ci peut être un support matériel de stockage, par exemple un CD-ROM. une disquette magnétique ou un disque dur, ou bien un support de transmission tel qu'un signal électrique, optique ou radio, ou un réseau de télécommunication.

L'invention concerne également un réseau 30 véhiculaire comprenant

- au moins un noeud jouant le rôle d'un noeud destinataire tel que précédemment décrit ;
- au moins un noeud source apte à se déplacer et comprenant des moyens 112 d'envoi de paquets à un noeud destinataire, agencés pour ajouter à un paquet à envoyer des informations de mobilité courantes,

et dans le cas où le noeud source et le noeud destinataire ne sont pas en portée radio directe, au moins un noeud intermédiaire comprenant des moyens 108 de test, agencés pour vérifier, pour un paquet reçu et à acheminer vers une zone géographique de destination, si la position géographique courante du noeud est plus proche de la zone géographique visée que celle du noeud intermédiaire précédent.

L'invention est également applicable aux réseaux ad hoc purs, c'est-à-dire des réseaux ad hoc sans infrastructure fixe.

ANNEXE

Point A : coordonnées (lat1, lon1)
Point B : coordonnées (lat2, lon2)

où latx est la latitude et low est la longitude
tc1 est la valeur de l'angle (exprimé en radians entre 0 et $\pi$) entre une direction de référence et une ligne s'étendant entre le noeud intermédiaire et la zone géographique de destination.
tc1=| atan2(sin(lon2-lon1)*cos(lat2),

$$\cos(lat1)*\sin(lat2)-\sin(lat1)*\cos(lat2)*\cos(lon2-lon1)) \mid$$

où atan2(x,y) est une fonction usuelle utilisée dans les langages de programmation qui retourne l'Arc Tangente du rapport de 2 variables x et y, exprimé en radians, entre -n et $\pi$ (inclus) et |x| ,.la fonction valeur absolue.

Cette formule est dérivée de celle du calcul de l'azimut entre deux points. Voir à titre d'exemple le site http://mathforum.org/library/drmath/view/55417.html.

**Revendications**

1. Procédé de communication entre un noeud source (10) et un noeud destinataire (20), lesdits noeud appartenant à un réseau (30) et étant aptes à acheminer des paquets dans le réseau, ledit noeud source étant en déplacement, le procédé comprenant les étapes suivantes mises en oeuvre par le noeud destinataire :

   - une étape (F1) de réception par le noeud destinataire d'un paquet transmis à partir du noeud source, ledit paquet comprenant en outre des informations de mobilité (53, 54) courantes relatives au noeud source ;
   - une étape (F16) de prédiction par le noeud destinataire d'une zone géographique de localisation du noeud source à partir des informations de mobilité courantes relatives au noeud source contenues dans ledit paquet préalablement reçu de celui-ci, la zone géographique ainsi prédite étant réputée zone géographique de destination ;
   - au moins une étape (F18) de transmission d'au moins un paquet de réponse vers la zone géographique de destination ;

   **caractérisé en ce que** la zone géographique de localisation est prédite pour l'acheminement dudit au moins un paquet de réponse à destination du noeud source et **en ce que** le réseau étant véhiculaire et les paquets transitant, le cas échéant, par au moins un noeud intermédiaire appartenant au réseau véhiculaire, la zone géographique de destination est transmise par le noeud de destination en association avec ledit au moins un paquet de réponse.

2. Procédé selon la revendication 1, dans lequel le paquet transmis à partir du noeud source et ledit autre paquet transitant par le noeud intermédiaire (12, 14), il est prévu les étapes suivantes mises en oeuvre par ledit noeud intermédiaire :

   - une étape (F24) de test, au cours de laquelle le noeud intermédiaire vérifie si sa position courante est plus proche de la zone géographique de destination que celle du noeud intermédiaire précédent, celui-ci ayant inséré sa position courante dans ledit paquet avant de le retransmettre ; et,
   - une étape (F30) de retransmission du paquet en transit vers la zone géographique de destination uniquement si le test est positif.

3. Procédé selon la revendication 2, dans lequel le paquet transmis à partir du noeud source, respectivement l'autre paquet, est reçu parallèlement par une pluralité de noeuds intermédiaires et chaque noeud intermédiaire met en oeuvre l'étape de test et retransmet le cas échéant le paquet, respectivement l'autre paquet, afin d'acheminer le paquet, respectivement l'autre paquet, par une pluralité de chemins concurrents.

4. Procédé selon la revendication 2 ou 3, dans lequel, préalablement à l'étape (F30) de retransmission du paquet en transit vers la zone géographique de destination, ledit noeud intermédiaire vérifie (F22) en outre si la valeur de l'angle compris entre une direction de référence et une ligne s'étendant entre le noeud intermédiaire et la zone géographique de destination est inférieure à un seuil prédéterminé.

5. Procédé selon l'une quelconque des revendications précédentes, dans lequel, le noeud destinataire étant un point d'accès à un réseau (1) de communication, relié à une entité (22) apte à authentifier un client,

   - avant authentification, un paquet en provenance du noeud source et à destination du point d'accès est retransmis par le point d'accès à l'entité et,
   - après authentification, le point d'accès autorise le noeud en déplacement à accéder au réseau de communication.

6. Noeud (100) d'un réseau véhiculaire (30), apte à communiquer avec d'autres noeuds du réseau, comprenant :

   - des moyens (102) de réception d'un paquet émis par un autre noeud en déplacement, ledit paquet comprenant des informations de mobilité courantes relatives à l'autre noeud ;

   **caractérisé en ce qu'**il comprend en outre :

   - des moyens (104) de prédiction, agencés pour prédire une zone géographique de localisation de l'autre noeud en déplacement à partir des informations de mobilité courantes relatives audit autre noeud contenues dans un paquet préalablement reçu, à destination duquel un paquet de réponse est à acheminer, la zone géographique ainsi prédite étant réputée zone géographique de destination ;
   - des moyens (106) de transmission d'un autre paquet vers la zone géographique de destination, l'autre paquet comprenant le paquet de réponse et la zone géographique de destination.

7. Noeud, selon la revendication 6, comprenant en outre :

   - des moyens (108) de test, agencés pour vérifier, pour un paquet reçu et à acheminer vers une zone géographique de destination, que la position géographique courante du noeud est plus proche de la zone géographique de destination que celle du noeud intermédiaire précédent.

8. Réseau véhiculaire (30), dans lequel des paquets sont acheminés par des noeuds en fonction d'une zone géographique de destination, comprenant :

   - au moins un noeud selon la revendication 6 ;
   - au moins un noeud source (10) apte à se déplacer et comprenant des moyens (112) d'envoi de paquets à un noeud destinataire, agencés pour ajouter à un paquet à envoyer des informations de mobilité courantes.

9. Réseau véhiculaire selon la revendication 8, comprenant en outre au moins un noeud intermédiaire comprenant des moyens (108) de test, agencés pour vérifier, pour un paquet reçu et à acheminer vers une zone géographique de destination, si la position géographique courante du noeud est plus proche de la zone géographique de destination que celle du noeud intermédiaire précédent.

10. Programme, pour un noeud d'un réseau véhiculaire, pour communiquer avec un autre noeud du réseau, ledit autre noeud étant en déplacement, comprenant des instructions de programme pour :

    - recevoir un paquet transmis à partir d'un autre noeud, dit noeud source, ledit paquet comprenant des informations de mobilité courantes relatives au noeud source;
    - et pour acheminer un paquet de réponse à destination du noeud source,

      - prédire une zone géographique de localisation du noeud source à partir des informations de mobilité courantes relatives au noeud source contenues dans ledit paquet préalablement reçu de celui-ci, la zone géographique ainsi prédite étant réputée zone géographique de destination ;
- transmettre un autre paquet vers la zone géographique de destination, l'autre paquet comprenant ledit paquet de réponse et la zone géographique de destination,

lorsque ledit programme est exécuté par le noeud.

11. Support d'enregistrement lisible par un noeud sur lequel est enregistré le programme selon la revendication 10.

## Patentansprüche

1. Kommunikationsverfahren zwischen einem Quellenknoten (10) und einem Empfängerknoten (20), wobei die Knoten zu einem Netz (30) gehören und Pakete im Netz befördern können, wobei der Quellenknoten sich bewegt, wobei das Verfahren die folgenden Schritte enthält, die vom Empfängerknoten angewendet werden:

   - einen Schritt (F1) des Empfangs durch den Empfängerknoten eines ausgehend vom Quellenknoten übertragenen Pakets, wobei das Paket außerdem laufende Mobilitätsinformationen (53, 54) des Quellenknotens enthält;
   - einen Schritt (F16) der Vorhersage durch den Empfängerknoten einer geographischen Zone des Standorts des Quellenknotens ausgehend von den laufenden Mobilitätsinformationen bezüglich des Quellenknotens, die im vorher von diesem empfangenen Paket enthalten sind, wobei die so vorhergesagte geographische Zone als geographische Empfangszone gilt;
   - mindestens einen Schritt (F18) der Übertragung mindestens eines Antwortpakets zur geographischen Empfangszone;

   dadurch gekennzeichnet, dass die geographische Standortzone für die Beförderung des mindestens einen Antwortpakets an den Quellenknoten vorhergesagt wird, und dass das Netz ein Verkehrsnetz ist, und die Pakete ggf. mindestens einen zum Verkehrsnetz gehörenden Zwischenknoten durchqueren, wobei die geographische Empfangszone vom Empfangsknoten zusammen mit dem mindestens einen Antwortpaket übertragen wird.

2. Verfahren nach Anspruch 1, wobei das ausgehend vom Quellenknoten übertragene Paket und das andere Paket den Zwischenknoten (12, 14) durchqueren, und wobei die folgenden Schritte vorgesehen sind, die vom Zwischenknoten durchgeführt werden:

   - ein Testschritt (F24), während dem der Zwischenknoten überprüft, ob seine laufende Position der geographischen Empfangszone näher ist als diejenige des vorhergehenden Zwischenknotens, wobei dieser seine laufende Stellung in das Paket vor seiner Weiterleitung eingefügt hat, und
   - ein Schritt (F30) der Weiterleitung des durchquerenden Pakets zur geographischen Empfangszone nur wenn der Test positiv ist.

3. Verfahren nach Anspruch 2, wobei das ausgehend vom Quellenknoten übertragene Paket, bzw. das andere Paket, parallel von einer Vielzahl von Zwischenknoten empfangen wird, und jeder Zwischenknoten den Testschritt durchführt und ggf. das Paket, bzw. das andere Paket, weiterleitet, um das Paket bzw. das andere Paket über eine Vielzahl konkurrierender Pfade zu befördern.

4. Verfahren nach Anspruch 2 oder 3, wobei vor dem Schritt (F30) der Weiterleitung des durchquerenden Paket zur geographischen Empfangszone der Zwischenknoten außerdem überprüft (F22), ob die Größe des Winkels zwischen einer Bezugsrichtung und einer Linie, die sich zwischen dem Zwischenknoten und der geographischen Empfangszone erstreckt, unter einer vorbestimmten Schwelle liegt.

5. Verfahren nach einem der vorhergehenden Ansprüche, wobei, wenn der Empfängerknoten ein Zugangspunkt zu einem Kommunikationsnetz (1) ist, der mit einer Entität (22) verbunden ist, die einen Client authentifizieren kann,

   - vor der Authentifizierung ein vom Quellenknoten kommendes und für den Zugangspunkt bestimmtes Paket vom Zugangspunkt an die Entität weitergeleitet wird, und
   - nach der Authentifizierung der Zugangspunkt dem in Bewegung befindlichen Knoten den Zugang zum Kommunikationsnetz erlaubt.

**6.** Knoten (100) eines Verkehrsnetzes (30), der mit anderen Knoten des Netzes kommunizieren kann, der enthält:

- Einrichtungen (102) zum Empfang eines von einem anderen in Bewegung befindlichen Knoten gesendeten Pakets, wobei das Paket laufende Mobilitätsinformationen bezüglich des anderen Knotens enthält;

**dadurch gekennzeichnet, dass** er außerdem enthält:

- Vorhersageeinrichtungen (104), die eingerichtet sind, um eine geographische Standortzone des anderen in Bewegung befindlichen Knotens ausgehend von den in einem vorher empfangenen Paket enthaltenen laufenden Mobilitätsinformationen bezüglich des anderen Knotens vorherzusagen, an den ein Antwortpaket befördert werden soll, wobei die so vorhergesagte geographische Zone als geographische Empfangszone gilt;
- Einrichtungen (106) zur Übertragung eines anderen Pakets zur geographischen Empfangszone, wobei das andere Paket das Antwortpaket und die geographische Empfangszone enthält.

**7.** Knoten nach Anspruch 6, der außerdem enthält:

- Testeinrichtungen (108), die eingerichtet sind, um für ein empfangenes und zu einer geographischen Empfangszone zu beförderndes Paket zu überprüfen, dass die laufende geographische Position des Knotens der geographischen Empfangszone näher ist als diejenige des vorhergehenden Zwischenknotens.

**8.** Verkehrsnetz (30), in dem Pakete von Knoten abhängig von einer geographischen Empfangszone befördert werden, das enthält:

- mindestens einen Knoten nach Anspruch 6;
- mindestens einen Quellenknoten (10), der sich bewegen kann und Einrichtungen (112) zum Senden von Paketen an einen Empfängerknoten enthält, die eingerichtet sind, um einem zu sendenden Paket laufende Mobilitätsinformationen hinzuzufügen.

**9.** Verkehrsnetz nach Anspruch 8, das außerdem mindestens einen Zwischenknoten enthält, der Testeinrichtungen (108) enthält, die eingerichtet sind, um für ein empfangenes und zu einer geographischen Empfangszone zu beförderndes Paket zu überprüfen, ob die laufende geographische Position des Knotens der geographischen Empfangszone näher ist als diejenige des vorhergehenden Zwischenknotens.

**10.** Programm für einen Knoten eines Verkehrsnetzes, um mit einem anderen Knoten des Netzes zu kommunizieren, wobei der andere Knoten sich in Bewegung befindet, das Programmanweisungen enthält, um:

- ein ausgehend von einem anderen Knoten, Quellenknoten genannt, übertragenes Paket zu empfangen, wobei das Paket laufende Mobilitätsinformationen bezüglich des Quellenknotens enthält;
- und um ein Antwortpaket an den Quellenknoten zu befördern,
- eine geographische Standortzone des Quellenknotens ausgehend von den laufenden Mobilitätsinformationen bezüglich des Quellenknotens vorherzusagen, die in dem vorher von diesem empfangenen Paket enthalten sind, wobei die so vorhergesagte geographische Zone als geographische Empfangszone gilt;
- ein anderes Paket zur geographischen Empfangszone zu übertragen, wobei das andere Paket das Antwortpaket und die geographische Empfangszone enthält,

wenn das Programm von dem Knoten ausgeführt wird.

**11.** Aufzeichnungsträger, der von einem Knoten gelesen werden kann, auf dem das Programm nach Anspruch 10 aufgezeichnet ist.

## Claims

**1.** Method of communication between a source node (10) and a destination node (20), said nodes belonging to a network (30) and being capable of routing packets in the network, said source node being a moving node, the method comprising the following steps implemented by the destination node:

- a step (F1) of reception by the destination node of a packet transmitted from the source node, said packet also comprising current mobility information (53, 54) concerning the source node;
- a step (F16) of prediction by the destination node of a geographic area of location of the source node from the current mobility information concerning the source node contained in said packet previously received therefrom, the duly predicted geographic area being deemed to be a destination geographic area;
- at least one step (F18) of transmission of at least one response packet to the destination geographic area; **characterized in that** the geographic area of location is predicted for the routing of said at least one response packet to the source node and **in that**, the network being vehicular and the packets transiting, as appropriate, through at least one intermediate node belonging to the vehicular network, the destination geographic area is transmitted by the destination node in association with said at least one response packet.

2. Method according to Claim 1, in which the packet transmitted from the source node and said other packet transiting through the intermediate node (12, 14), the following steps are provided, implemented by said intermediate node:

- a test step (F24), during which the intermediate node checks whether its current position is closer to the destination geographic area than that of the preceding intermediate node, the latter having inserted its current position into said packet before retransmitting it; and,
- a step (F30) of retransmission of the packet in transit to the destination geographic area only if the test is positive.

3. Method according to Claim 2, in which the packet transmitted from the source node, respectively the other packet, is received in parallel by a plurality of intermediate nodes and each intermediate node implements the test step and, if appropriate, retransmits the packet, respectively the other packet, in order to route the packet, respectively the other packet, via a plurality of competing paths.

4. Method according to Claim 2 or 3, in which, prior to the step (F30) of retransmission of the packet in transit to the destination geographic area, said intermediate node also checks (F22) whether the value of the angle between a reference direction and a line extending between the intermediate node and the destination geographic area is less than a predetermined threshold.

5. Method according to any one of the preceding claims, in which, the destination node being an access point to a communication network (1), linked to an entity (22) capable of authenticating a client,

- before authentication, a packet from the source node and to the access point is retransmitted by the access point to the entity and,
- after authentication, the access point authorizes the moving node to access the communication network.

6. Node (100) of a vehicular network (30), capable of communicating with other nodes of the network, comprising:

- means (102) for receiving a packet transmitted by another moving node, said packet comprising current mobility information concerning the other node;

**characterized in that** it also comprises:

- prediction means (104), arranged to predict a geographic area of location of the other moving node from the current mobility information concerning said other node contained in a previously received packet, to which a response packet is to be routed, the duly predicted geographic area being deemed to be a destination geographic area;
- means (106) for transmitting another packet to the destination geographic area, the other packet comprising the response packet and the destination geographic area.

7. Node, according to Claim 6, also comprising:

- test means (108), arranged to check, for a packet received and to be routed to a destination geographic area, that the current geographic position of the node is closer to the destination geographic area than that of the preceding intermediate node.

8. Vehicular network (30), in which packets are routed by nodes according to a destination geographic area, comprising:

- at least one node according to Claim 6;

- at least one source node (10) capable of moving and comprising means (112) for sending packets to a destination node, arranged to add current mobility information to a packet to be sent.

9. Vehicular network according to claim 8, also comprising at least one intermediate node comprising test means (108), arranged to check, for a packet received and to be routed to a destination geographic area, whether the current geographic position of the node is closer to the destination geographic area than that of the preceding intermediate node.

10. Program, for a node of a vehicular network, for communicating with another node of the network, said other node being a moving node, comprising program instructions for:

- receiving a packet transmitted from another node, called source node, said packet comprising current mobility information concerning the source node;
- and for routing a response packet to the source node,

- predicting a geographic area of location of the source node from the current mobility information concerning the source node contained in said packet previously received therefrom, the duly predicted geographic area being deemed to be a destination geographic area;
- transmitting another packet to the destination geographic area, the other packet comprising said response packet and the destination geographic area,

when said program is run by the node.

11. Storage medium that can be read by a node on which is stored the program according to Claim 10.

Fig 1

Fig 2

Fig 3

Fig 4

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• JP 2004096356 B

• US 6611688 B1

**Littérature non-brevet citée dans la description**

• **DE J. LI.** *PANDA : A novel mechanism for flooding based route discovery in ad hoc networks*